# EUROPEAN PATENT APPLICATION

(11) **EP 1 235 390 A1**
(43) Date of publication of application: **28.08.2002**
(21) Application number: 01974766.6
(22) Date of filing: 10.10.2001
(51) Int. Cl.: H04L 12/28, G06F 12/14, G06F 3/06

(54) **INFORMATION PROCESSING APPARATUS**

(30) Priority: 10.10.2000 JP 2000309005
(71) Applicant: Sony Corporation, Tokyo 141-0001 (JP)
(72) Inventor: HORIGUCHI, Masato, c/o SONY CORPORATION, Tokyo 141-0001 (JP)
(74) Representative: Mills, Julia
(86) International application number: JP0108899
(87) International publication number: WO02032057

(57) **Abstract**

The present invention relates to an information processing apparatus. In a network system complying with the IEEE1394 standard, a personal computer having a device therewithin gains an access right to access the device. A topology analyzing unit 221 of a priority determination module 203 determines the priority order of the access right to own apparatus connected to the network, and causes a priority memory 222 to store the determined priority order. When another device on the network requests an access right, a CPU 204 acquires GUID through the IEEE 1394 network, and compares the acquired GUID with the GUID of a device having a first priority order stored in the priority memory 222. If both GUIDs coincide with each other, the CPU 204 grants to the other device the access right.

## Description

### Technical Field

The present invention relates information processing apparatuses and, in particular, to an information processing apparatus which gains an access right to access another predetermined information processing apparatus over a network formed of an IEEE (Institute of Electrical and Electronic Engineers) 1394 high-speed serial bus.

### Background Art

Networks employing SBP2 (Serial Bus Protocol 2) are now being widely used. The SBP2 is one of communication protocol standards, and is considered as an optimum standard in an interconnection based on the IEEE high-speed serial bus (hereinafter simply referred to as the IEEE1394) standards.

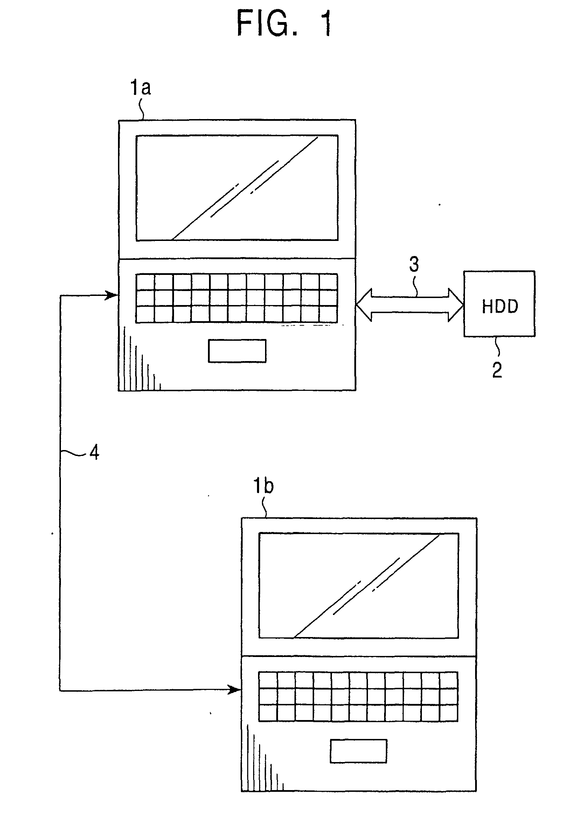

FIG. 1 illustrates a conventional network in which a personal computer complying with the SBP2 is connected to an HDD through the IEEE 1394. The HDD (Hard Disk Drive) 2 is connected to the personal computer 1a through an IEEE 1394 connection unit 3. As shown, the HDD 2 is actually internally installed in the personal computer 1a. Personal computers 1a and 1b are connected to each other through an IEEE 1394 cable 4 (if there is no need for discriminating one computer from the other, each is referred to as a personal computer 1).

In accordance with the SBP 2 standards, a device, such as the personal computer 1, which initiates an action (to send a command for an operation) over the network constructed as illustrated in FIG. 1, is called an "initiator," and a device, such as the HDD 2, which operates in response to the command from the initiator, is called a "target."

In the network constructed as in FIG. 1, the target is allowed to receive an access from a single initiator (a single target cannot share a plurality of initiators). In other words, the access right is determined when the personal computer 1 of the personal computers 1a and 1b which has accessed the HDD 2 earlier than the other exclusively gains the access right to the HDD 2 (race condition).

When the personal computer 1b accesses first the HDD 2 under this race condition over the network illustrated in FIG. 1, the personal computer 1a, although having the built-in HDD 2, cannot access the HDD 2, and the personal computer 1b connected through the network is exclusively granted the access right.

To resolve this problem, it has been proposed that the access right be set in the order of connection to the IEEE 1394. However, if the connection order is changed, the setting is also changed. This arrangement fails to essentially resolve the problem.

To resolve this problem, it has also been proposed that the access right be granted to only an initiator which requests an access right with a proper password using the password function provided in the SBP 2 standards. However, if a plurality of initiators knows the password, one initiator which accesses first the HDD 2 gains the access right exclusively. This arrangement also fails to essentially resolve the above-mentioned problem.

### Disclosure of the Invention

The present invention has been developed in view of this problem. It is an object of the present invention to allow a predetermined initiator to gain an access right to access a predetermined target over a network in compliance with the SBP 2 standards.

An information processing apparatus of the present invention includes input means for inputting authentication information output from the plurality of other information processing apparatuses, network structure recognition means for recognizing the structure of the network based on the authentication information input by the input means, priority order determining means for determining the priority order according to which the plurality of other information processing apparatuses accesses own information processing apparatus, based the network structure recognized by the network structure recognition means, and access control means for controlling the access of the plurality of other information processing apparatuses to own information processing apparatus, based on the priority order determined by the priority order determining means.

The information processing apparatus may further include topology generation means for generating topology based on the authentication information of the plurality of other information processing apparatuses input by the input means, wherein the network structure recognition means recognizes the structure of the network based on the topology generated by the topology generation means.

The information processing apparatus may further include hop number counting means for counting a hop number over the network per each of the plurality of information processing apparatuses, based on the network structure recognized by the network structure recognition means, wherein the priority order determining means determines the priority order of access rights of the plurality of information processing apparatuses to own information processing apparatus, based on the hop number of each of the plurality of information processing apparatuses counted by the hop number counting means.

The information processing apparatus may further include a plurality of connection ports to which the plurality of information processing apparatuses is connected, and connection port priority order setting means for setting the priority order of the plurality of connection ports, wherein the priority order determining means determines the priority order of the access rights of the plurality of information processing apparatuses to own information processing apparatuses, based on the hop number of each of the plurality of information processing apparatuses counted by the hop number counting means and the priority order to the connection port set by the connection port priority order setting means.

The network may be a 1394 high-speed serial bus, and the authentication information may contain a self ID packet.

An information processing method of the present invention includes for an input step for inputting authentication information output from the plurality of other information processing apparatuses, a network structure recognition step for recognizing the structure of the network based on the authentication information input in the input step, a priority order determining step for determining the priority order according to which the plurality of other information processing apparatuses accesses own information processing apparatus, based the network structure recognized in the network structure recognition step, and an access control step for controlling the access of the plurality of other information processing apparatuses to own information processing apparatus, based on the priority order determined in the priority order determining step.

A software program of a program storage medium includes an input step for inputting authentication information output from the plurality of other information processing apparatuses, a network structure recognition step for recognizing the structure of the network based on the authentication information input in the input step, a priority order determining step for determining the priority order according to which the plurality of other information processing apparatuses accesses own information processing apparatus, based the network structure recognized in the network structure recognition step, and an access control step for controlling the access of the plurality of other information processing apparatuses to own information processing apparatus, based on the priority order determined in the priority order determining step.

In accordance with the information processing apparatus, the information processing method and the program storage medium of the present invention, the network structure is recognized based on the input authentication information, the priority order of the plurality of other information processing apparatuses to access own information processing apparatus is determined based on the recognized network structure, and the accessing of the plurality of other information processing apparatuses to own information processing apparatus is controlled based on the determined priority order.

### Brief Description of the Drawings

FIG. 1 is a block diagram illustrating a conventional information processing system formed of the IEEE1394.
FIG. 2 illustrates the structure of a personal computer in which the present invention is incorporated.
FIG. 3 illustrates the structure of the personal computer in which the present invention is incorporated.
FIG. 4 illustrates the structure of the personal computer in which the present invention is incorporated.
FIG. 5 illustrates the structure of the personal computer in which the present invention is incorporated.
FIG. 6 illustrates the structure of the personal computer in which the present invention is incorporated.
FIG. 7 is a block diagram of an HDD in which the present invention is incorporated.
FIG. 8 is a block diagram of a network which is constructed by chaining personal computers and HDDs.
FIG. 9 is a flow diagram illustrating a bus reset process.
FIG. 10 is a block diagram illustrating an information processing system formed of the IEEE 1394.
FIG. 11 is a flow diagram illustrating a topology analyzing process.
FIG. 12 illustrates a format of a priority list.
FIG. 13 is a flow diagram illustrating a priority determination process.
FIG. 14 is a flow diagram of an access right acquisition process in which the personal computer gains an access right to access the HDD.
FIG. 15 illustrates a format of LoginORB.
FIG. 16 illustrates a format of login_response.
FIG. 17 illustrates a format of status_block.
FIG. 18 is a flow diagram illustrating an access right acquisition process in which a personal computer gains an access right to access the HDD.
FIG. 19 is a flow diagram illustrating an access right acquisition process in which a personal computer gains an access right to access the HDD.

### Best Mode for Carrying out the Invention

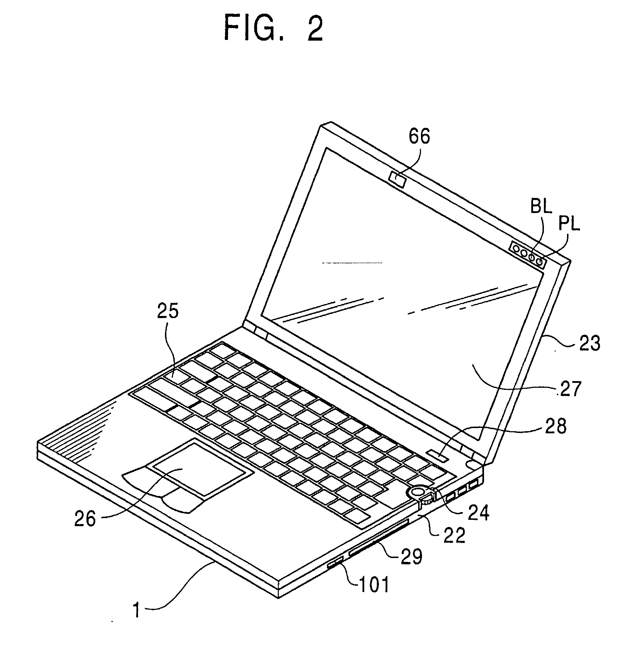

An IEEE 1394 network structure of the present invention remains unchanged from the conventional art shown in FIG. 1. FIGS. 2 through 5 illustrate the construction of a personal computer forming this network in accordance with one embodiment of the present invention. In FIG. 2 and following drawings, components identical to those described in connection with the conventional art shown in FIG. 1 are designated with the same reference numerals and the discussion thereof is omitted here.

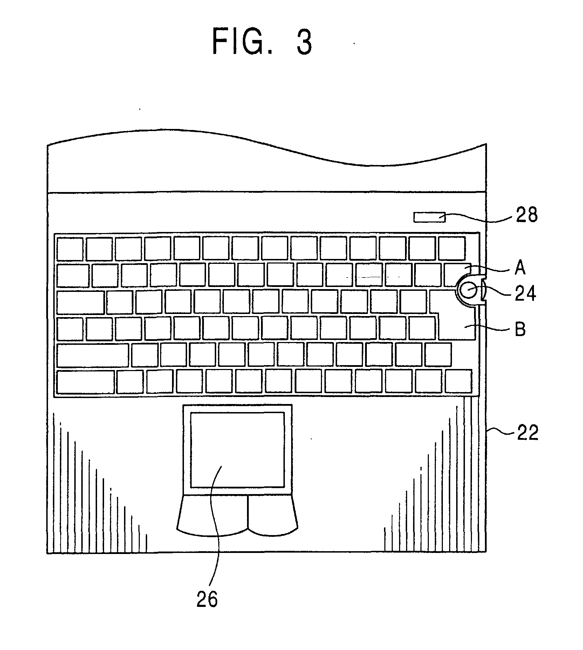

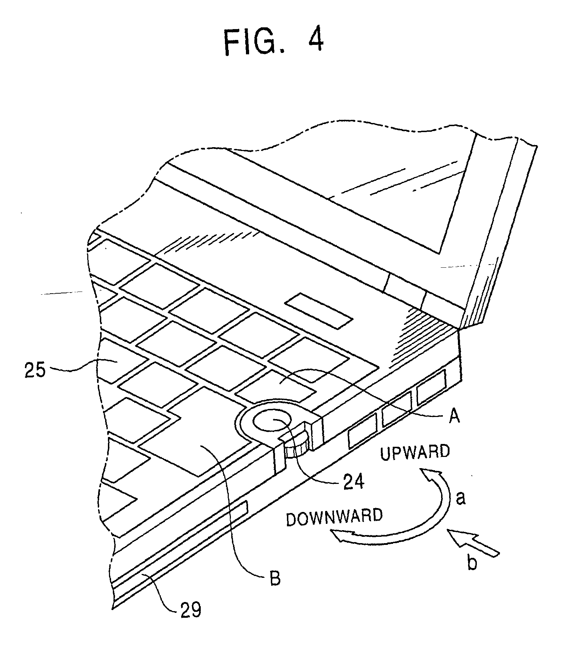

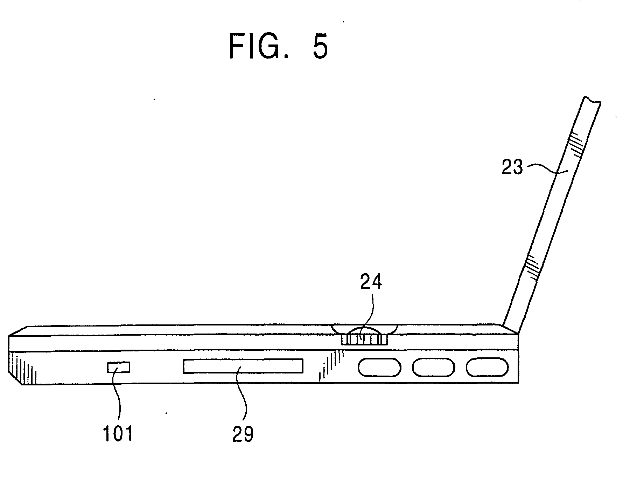

The personal computer 1 basically includes a computer body 22, and a display unit 23 which is opened from and closed to the computer body 22. FIG. 2 is a perspective view of the personal computer 1 with the display unit 23 opened from the computer body 22. FIG. 3 is a plan view of the computer body 22, and FIG. 4 is an enlarged view of a jog dial 24 to be discussed later and its associated components on the computer body 22. FIG. 5 is a side view of the jog dial 24 of the computer body 22.

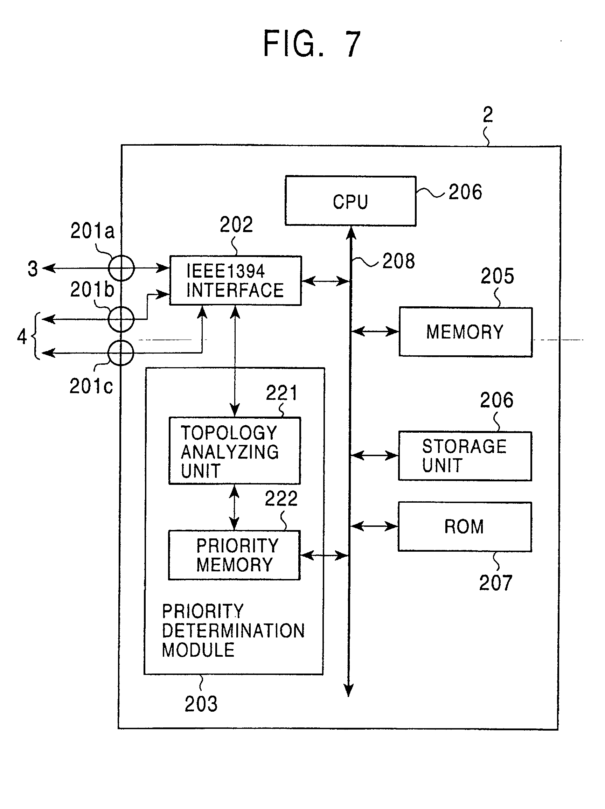

The computer body 22 includes, on the top side thereof, a keyboard 25 which is operated to input a variety of characters and symbols, a touchpad 26 as a pointing device to move a pointer (a mouse cursor), and a power switch 28, and further the jog dial 24 and an IEEE 1394 port 101, etc., on the sidewall thereof. Although not shown on the external perspective view, an IEEE 1394 port 102 is arranged to be connected to an internal built-in device, and an IEEE 1394 connection unit 3 is formed of the internal IEEE 1394 port 102 and the an IEEE 1394 port 201a (FIG. 7) of the HDD 2 connected to the IEEE 1394 port 102.

An LCD (Liquid Crystal Display) 27 is arranged on the front of the display unit 23 to present an image thereon. The display unit 23 has, on the top right portion thereof, a power lamp PL, a battery lamp BL, a message lamp ML as necessary, and other lamps formed of LEDs. The display unit 23 has further, on the top portion thereof, a microphone 66. The power lamp PL, the battery lamp BL, the message lamp ML, etc., may be arranged on the bottom portion of the display unit 23.

The jog dial 24 is mounted in generally flush with the keys between keys of the keyboard 25 on the computer body 22. The jog dial 24 performs predetermined processes in response to the direction of rotation as represented by an arrow a in FIG. 4, and also performs a process in response to a movement in a direction represented by an arrow b. The jog dial 24 may be arranged on the left-hand sidewall of the computer body 22, on the left-hand sidewall or the righthand sidewall of the display unit 23 having the LCD 27, or may be vertically aligned between the G key and the H key on the keyboard 25. The jog dial 24 may be arranged at the center of the front of the personal computer 1 so that the touchpad 26 is operated by the thumb with the touchpad 26 operated by the index finger at the same time, may be arranged to be horizontally aligned along the upper edge or the lower edge of the touchpad 26, or may be arranged to be vertically aligned between a right button and a left button of the touchpad 26. The jog dial 24 may be diagonally aligned at an angle rather than in a vertical direction or horizontal direction so that it may be operated by any finger. Alternatively, the jog dial 24 may be placed on one side of the mouse as a pointing device to be operated by the thumb.

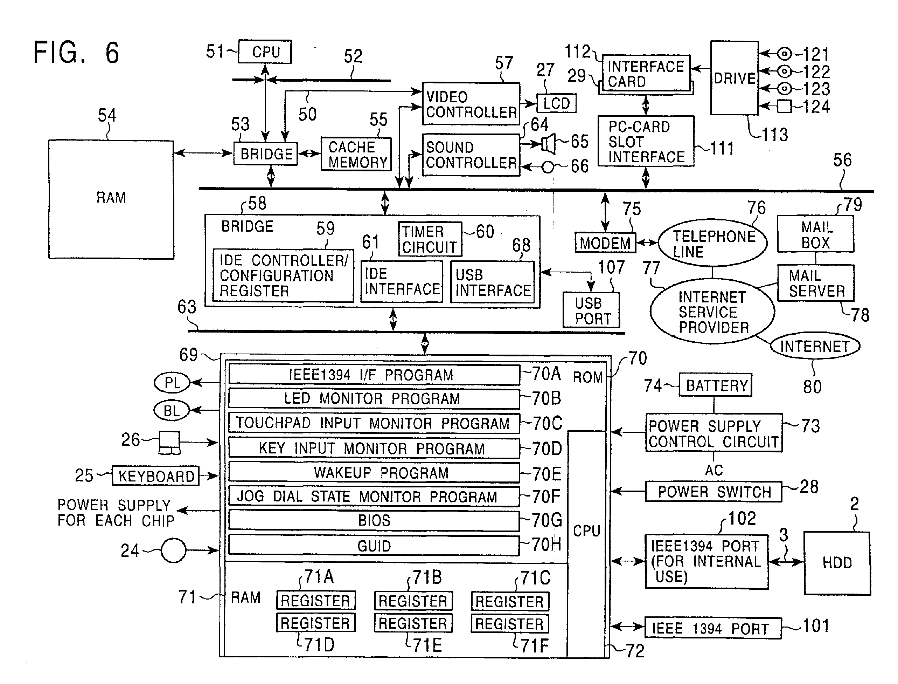

FIG. 6 is a block diagram illustrating an electrical construction of the personal computer 1.

A CPU (Central Processing Unit) 51 is a Pentium processor (Tradename of Intel), for example, and is connected to a host bus 52. The host bus 52 is connected to a bridge 53, which is, in turn, connected to an AGP (Accelerated Graphics Port) 50 and a PCI bus 56. The bridge 53 is 400BX manufactured by Intel, for example, and controls components associated with the CPU 51 and a RAM 54. The bridge 53 is connected to a video controller 57 via the AGP 50. The bridge 53 and a bridge 58 form a so-called chip set.

The bridge 53 is also connected to the RAM (Random Access Memory) 54 and a cache memory 55. The cache memory 55 caches data to be used by the CPU 51. The CPU 51 has an internal primary cache memory, although not shown.

The RAM 54, formed of a DRAM (Dynamic Random Access Memory), for example, stores programs executed by the CPU 51 and data required by the CPU 51 in the operation thereof.

The video controller 57 is connected to the PCI bus 56, and is also connected to the bridge 53 via the AGP 50, and controls presentation of the LCD 27 based on the data supplied via the PCI bus 56 and the AGP 50.

A sound controller 64, connected to the PCI bus 56, receives voice input from the microphone 66, and outputs a voice signal to a loudspeaker 65. Also connected to the PCI bus 56 are a modem 75 and a PC card slot interface 111.

The modem 75 is linked to a communication network 80 such as the Internet and a mail server 78 via a public telephone line 76 and an Internet service provider 77. To add optional functions, an interface card 112 is inserted into a slot 29 connected to the PC card slot interface 111 as necessary so that data exchange with an external device is performed. For example, a drive 113 may be connected to the interface card 112 to exchange data with a magnetic disk 121, an optical disk 122, a magnetooptical disk 123, and a semiconductor memory 124 inserted into the drive 113.

The bridge 58 is connected to the PCI bus 56. The bridge 58 may be PIIX4E manufactured by Intel, and controls a variety of inputs and outputs. Specifically, the bridge 58 includes an IDE (Integrated Drive Electronics) control/configuration register 59, a timer circuit 60, an IDE interface 61, and a USB (Universal Serial Bus) interface 68. The bridge 58 controls devices connected to a USB port 107, and devices connected to an ISA/EIO (Industry Standard Architecture / Extended Input Output) bus 63 and an I/O interface 69.

The IDE control/configuration register 59 includes two IDE controllers, so-called primary IDE controller and secondary IDE controller, and a configuration register, etc.

The primary IDE controller and the secondary IDE controller (not shown) are designed to be connected to external devices.

The I/O interface 69 is connected to the ISA/EIO bus 63. The I/O interface 69, a ROM 70, a RAM 71, and a CPU 72 are mutually connected to each other.

For example, the ROM 70 stores beforehand an LED control program 70B, a touchpad input monitoring program 70C, a key input monitoring program 70D, a wakeup program 70E, a jog dial state monitoring program 70F, and an IEEE 1394 I/F (interface) monitoring program 70A.

The IEEE 1394 I/F monitoring program 70A inputs and outputs data in compliance with the IEEE 1394 standards, received and transmitted through IEEE 1349 ports 101 and 102. The IEEE 1394 I/F monitoring program 70A sends a self ID packet to a route over a network (such as an HDD 2, the route being set to any device over the network) for a connected external device such as the HDD 2 connected to the IEEE 1394 port 101 or 102 immediately after the connection of the HDD 2 to the network (immediately after a bus reset), while performing a process for acquiring an access right. The process of acquiring the access right will be discussed later. The self ID packet includes a GUID (Global Unique Identifier), a physical ID of the physical layer of each personal computer (initiator) 1, and information relating to the connection status of each of the IEEE 1394 ports 101 and 102. The GUID is universally accepted authentication information for identifying the types, manufacturers, model names, and serial numbers of all devices connected to the IEEE 1394. The self ID packet will be discussed later.

The LED control program 70B controls lighting of the power lamp PL, the battery lamp BL, the message lamp ML as necessary, and other lamps formed of LEDs. The touchpad input monitoring program 70C monitors inputs given by the user who uses the touchpad 26. The key input monitoring program 70D monitors inputs given by the user who uses the keyboard 25 and the other key switches. The wakeup program 70E checks whether it is a predetermined time based on current time data supplied from the timer circuit 60 in the bridge 58. When it is the predetermined time, the wakeup program 70E manages the power supply of each chip to activate a predetermined process (or a program). The jog dial state monitoring program 70F continuously monitors a rotary encoder of the jog dial 24 to check to see if it is rotated or pressed.

The ROM 70 stores a BIOS (Basic Input/Output System) 70G. The BIOS is a basic input/output system, and is a software program to control input and output of data between an OS (Operating System), an application program, and peripheral devices (display, keyboard, HDD, etc.).

The ROM 70 also stores GUID 70H, which is read as required. The memory for storing the GUID may be separately arranged in the form of a configuration ROM or a dedicated memory.

The RAM 71 includes an LED control register, a touchpad input status register, a key input status register, a time setting register, an I/O register for monitoring the jog dial state, and an IEEE 1394 I/F register respectively designated with reference numerals 71A through 71F. For example, the LED control register controls the message lamp ML to be on to indicate the instantaneous startup state of an electronic mail when the jog dial 24 is pressed. The key input status register stores an operation key flag when the jog dial 24 is pressed. The time setting register sets time for any time.

The jog dial 24, the keyboard 25, and the touchpad 26 are respectively connected to the I/O interface 69 through unshown connectors. When user operates the jog dial 24, the keyboard 25, or the touchpad 26, the I/O interface 69 receives a signal in response to the user operation, and outputs the signal to the ISA/EIO bus 63. The I/O interface 69 exchanges data with outside via the IEEE 1394 ports 101 and 102. Also connected to the I/O interface 69 are the power lamp PL, the battery lamp BL, the message lamp ML, a power supply control circuit 73, and lamps formed of other LEDs.

The power supply control circuit 73, connected to a built-in battery 74 or an AC power supply, feeds required power to each block, and controls the built-in battery 74 and second batteries of peripheral devices in charging operations thereof. The CPU 72 monitors, through the I/O interface 69, the power switch 28 which is operated to turn on and off.

The CPU 72 executes the IEEE 1394 I/F monitoring program 70A through the BIOS 70G from an internal power supply even when a power supply 8 is off. Specifically, the IEEE 1394 I/F monitoring program 70A through the BIOS 70G continuously operate even when no windows are opened on the display unit 23 and the LCD 27. Even when the OS is not initiated on the CPU 51 with the power switch 28 remaining off, the CPU 72 executes the jog dial state monitoring program 70E. Without a dedicated key, the personal computer 1 has a programmable power key (PPK) function. With the personal computer 1 in power saving state or a power off state, a desired software program or a script file may be initiated by pressing the jog dial 24.

The construction of the HDD 2 is now discussed with reference to FIG. 7.

The HDD 2 is provided with the IEEE 1394 ports 201a through 201c for connection with external devices. The IEEE 1394 port 201a is for connection with an internal device, and IEEE 1394 ports 201b and 201c are for external connection. Referring to FIG. 1, the HDD 2 is a built-in device of the personal computer 1a, and the IEEE 1394 port 201a is connected to the IEEE 1394 port 102 (see FIG. 6) of the personal computer 1a.

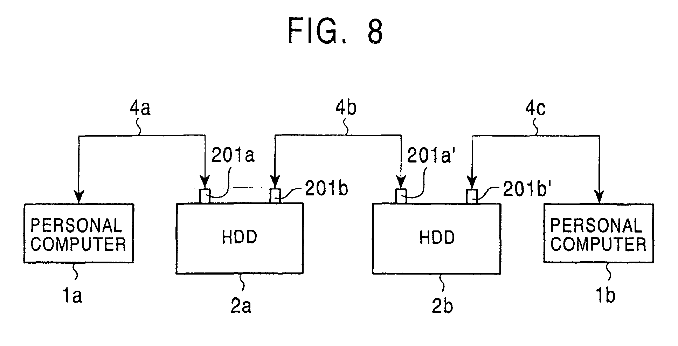

Referring to FIG. 8, the personal computer 1a is connected to the IEEE 1394 port 201a of an HDD 2a via an IEEE 1394 cable 4a, the IEEE 1394 port 201b of the HDD 2a is connected to an IEEE 1394 port 201a' of an HDD 2b via an IEEE 1394 cable 4b, and an IEEE 1394 port 201b' of the HDD 2b is connected to the personal computer 1b via an IEEE 1394 cable 4c. A network is thus formed of a chain of the two HDDs and the two personal computers. A IEEE 1394 port 201c is equally used. The type of and the number of devices to be connected are freely set in any form other than this arrangement.

An IEEE 1394 interface 202 is connected to the personal computer 1 through the IEEE 1394 ports 201a through 201c and the IEEE 1394 connection unit 3, and functions as an interface of the personal computer 1.

A topology analyzing unit 221 of the priority determination module 203 receives the self ID packet transmitted from each device over the network through the IEEE 1394 interface 202 immediately after the IEEE 1394 network is established (immediately after the bus reset), determines a topology map (a connection position relationship of each device) from the information contained in the self ID packet, generates a priority list for each device, and stores the priority list in the priority memory 222. The priority list will be discussed later. The topology analyzing unit 221 stores the predetermined priority order of the IEEE 1394 ports 201a through 201c. The priority order of the IEEE 1394 ports 201a through 201c may be designed to be modified. In the discussion that follows, the priority order is the IEEE 1394 port 201a, the IEEE 1394 port 201b, and the IEEE 1394 port 201c in that order.

The topology analyzing unit 221 determines the priority of the access right to access each device over the network based on the topology map stored in the priority memory 222, the priority list of each device, and the predetermined priority order of the IEEE 1394 ports 201a through 201c. The topology analyzing unit 221 then stores the priority in the priority list of each device in the priority memory 222.

The CPU 204 grants a device having a first priority order the access right, referring to the priority list stored in the priority memory 222 of the priority determination module 203. Optionally, an unshown switch is arranged on the HDD 2. When the switch is turned on or off, the priority list indicating the priority order of the device stored in the priority memory 222 is not referenced.

A memory 205 stores and reads information required to perform a variety of processes to be carried out by the CPU 204 as appropriate, and also stores a password. A storage unit 206 containing a hard disk is controlled by the CPU 204, and stores a variety of data to be processed by the personal computer 1a while reading stored data. A ROM 207 stores the GUID of the HDD 2.

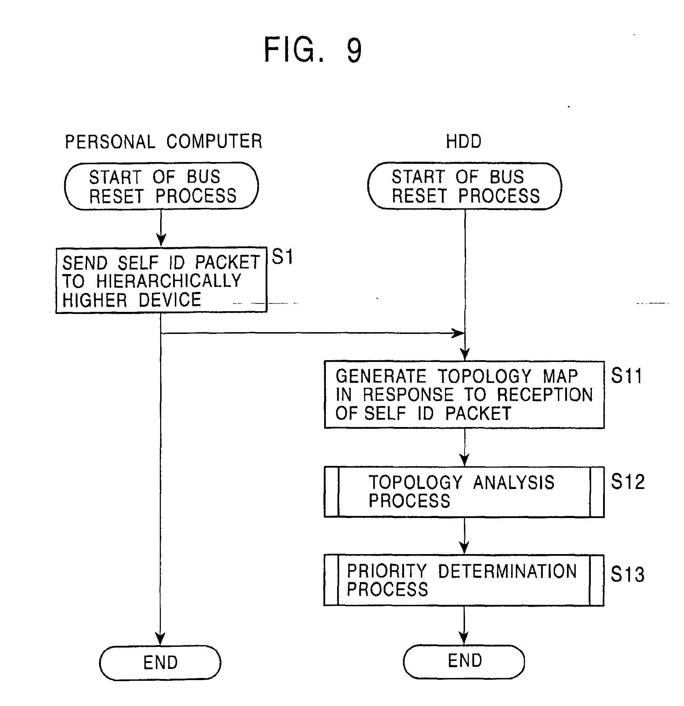

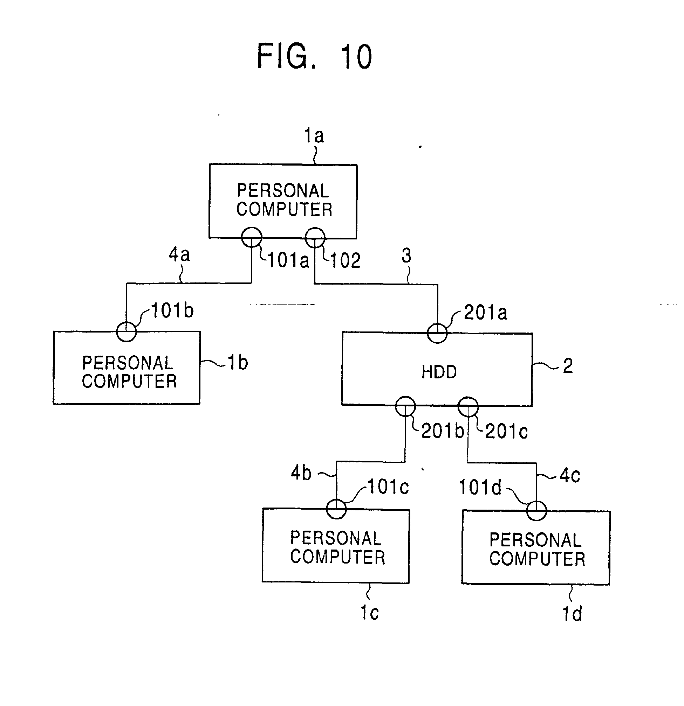

Referring to FIG. 9, the bus reset process of the personal computer 1 and the HDD 2 will now be discussed. In the discussion that follows, four personal computers 1a through 1d and the HDD 2 are connected as shown in FIG. 10. Specifically, an IEEE 1394 port 101b of the personal computer 1b is connected to an IEEE 1394 port 101a of the personal computer 1a through an IEEE 1394 cable 4a, an IEEE 1394 port 102 of the personal computer 1a is connected to an IEEE 1394 port 201a of the HDD 2 through an IEEE 1394 connection unit 3, an IEEE 1394 port 201b of the HDD 2 is connected to an IEEE 1394 port 101c of the personal computer 1c through an IEEE 1394 cable 4b, and an IEEE 1394 port 201c of the HDD 2 is connected to an IEEE 1394 port 101d of the personal computer 1d through an IEEE 1394 cable 4c. It is assumed that the personal computer 1d is unable to recognize a command defined in the SBP2 standards. As for the Node_IDs of the devices over the network, the personal computer 1b is assigned zero, the personal computer 1a is assigned 1, the HDD 2 is assigned 2, the personal computer 1c is assigned 3, and the personal computer 1d is assigned 4.

In step S1, the personal computer 1 initiates the IEEE 1394 I/F monitoring program 70A, generating the self ID packet, and sending the self ID packet to a hierarchically higher device over the network.

In step S11, the topology analyzing unit 221 of the priority determination module 203 of the HDD 2 receives the self ID packet for each of the IEEE 1394 ports 201a through 201c, and generates the connection position relationship arranged as in FIG. 10, namely, a topology map, from information contained in the self ID packet. The topology analyzing unit 221 then stores the topology map together with the self ID packet of each device in the priority memory 222.

For understanding of the processes in steps S1 and S11, the generation of the topology map and the self ID packet is now discussed. The self ID packet is generated and transmitted each time the bus is reset by a device that is chained at the terminal of the network.

In the SBP2 standards, a device serving as a reference to express the network structure is called a root (the root is set at any device over the network). The root outputs a signal called grant to the devices over the network on each port, and successively transfers the grant from device to device down to the terminal of the network. The device which is unable to transfer the grant is a device placed at the terminal of the network. Referring to FIG. 10, the devices placed at the terminal of the network are personal computers 1b through 1d.

For example, the IEEE 1394 I/F monitoring program 70A of the personal computer 1b generates the self ID packet, and sets the count of the self ID packet to zero as an initial value, and also sets own physical ID (indicating own electrical position over the network) to the same value zero as the count. The personal computer 1b organizes, in the self ID packet, the state of own IEEE 1394 port 101b and own GUID, and transmits the self ID packet to the personal computer 1a present in the direction of the root on the network.

The state of the port is information indicating the positional relationship of the devices over the network. On the network, out of the ports connected to the IEEE 1394 cable 4 or the IEEE 1394 connection unit 3 between the devices, a port as a start point in the direction of the root is referred to as a child and a port as an end point in the direction of the root is referred to as a parent. The IEEE 1394 I/F monitoring program 70A of the personal computer 1b organizes the information that own IEEE 1394 port 101b is a child (namely, the start point in the direction of the root), own physical ID (zero in this case), and own GUID into the self ID packet, and sends the self ID packet to the personal computer 1a.

Upon receiving the self ID packet from the personal computer 1b, the IEEE 1394 I/F monitoring program 70A of the personal computer 1a increments the count of the self ID packet by 1, and sets own physical ID to the same count value. In other words, the physical ID of the personal computer 1a is 1. The IEEE 1394 I/F monitoring program 70A of the personal computer 1a adds and organizes, as own packet information, information that the IEEE 1394 port 101a is a parent (namely, the end point with respect to the root), information that own IEEE 1394 port 102 is a child (the start point with respect to the root), and own GUID information into the self ID packet, and transmits the self ID packet to the HDD 2.

Upon receiving the self ID packet from the personal computer 1a, the topology analyzing unit 221 of the HDD 2 recognizes the network structure connected to the IEEE 1394 port 201a from the GUID information of each device, the physical ID of the GUIDE, and information indicating the state of each port contained in the self ID packet.

The topology analyzing unit 221 of the HDD 2 performs the same process to the IEEE 1394 ports 201b and 201c, and the generation of the topology map is completed by integrating the network structure information recognized at each of the IEEE 1394 ports 201a through 201c.

In the process of the personal computer 1 in step S1, the self ID packet is generated in the personal computers 1b through 1d present at the terminal of the network shown in FIG. 10. The GUID of the personal computers 1b through 1d, the physical ID corresponding to the GUID, and the information indicating the state of each port are organized into the self ID packet, which is then transmitted to devices higher in hierarchical structure (the personal computer 1b sends the self ID packet to the personal computer 1a, and the personal computers 1c and 1d send the self ID packet to the HDD 2).

In the process of the personal computer 1 in step S1 for a device such as the personal computer 1a present not at the terminal of the network as shown in FIG. 10, the count of the self ID packet received from the personal computer 1b is incremented by 1, and the GUID of the personal computer 1a, the physical ID corresponding to the GUID, and the information indicating the state of each port organized into the self ID packet are sent to a hierarchically higher device (corresponding to the HDD 2 in FIG. 10).

The HDD 2 thus receives a total of 3 self ID packets for the IEEE 1394 ports 201a through 201c. Information contained in the self ID packet is unconn (un-connect) indicating that a port is connected, and noport indicating that no port is present, besides child and parent.

The discussion of the flow diagram shown in FIG. 9 is continued.

In step S12, the topology analyzing unit 221 of the HDD 2 performs a topology analysis process based on the topology map stored in the priority memory 222 and the information contained in the self ID packet.

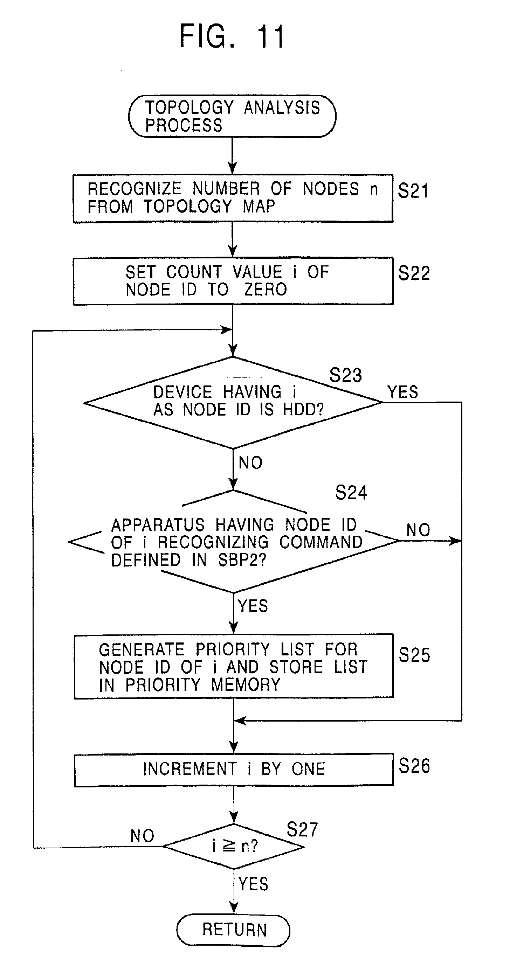

Referring to a flow diagram shown in FIG. 11, the topology analysis process is now discussed. In step S21, the topology analyzing unit 221 recognizes the number nodes n from the topology map stored in the priority memory 222. In this case, the number of nodes n is five because there are four personal computers and one HDD.

In step S22, the topology analyzing unit 221 sets own count i of the Node_ID stored therewithin to zero. In step S23, the topology analyzing unit 221 determines whether the device having a count i of Node_ID is the HDD 2. In this case, the device having a Node_ID of zero is the personal computer 1b, and the topology analyzing unit 221 determines that the device having the count i as the Node_ID is not the HDD 2, and the algorithm proceeds to step S24.

In step S24, the topology analyzing unit 221 determines whether a device having a Node_ID of zero recognizes a command defined in the SBP2. Specifically, the topology analyzing unit 221 sends a test command of the SBP2 to a target device. Upon receiving the test command, a device capable of recognizing the SBP2 command returns a response command. In this way, depending on the presence or absence of the response command from the target device, the topology analyzing unit 221 determines whether the target device complies with the SBP2.

Since the device having a Node_ID of zero is the personal computer 1b, the topology analyzing unit 221 determines whether the personal computer 1b recognizes the command defined in the SBP2. The personal computer 1b recognizes the command defined in the SBP2. Upon receiving the test command from the topology analyzing unit 221, the personal computer 1b returns the response command to the topology analyzing unit 221. As a result, the topology analyzing unit 221 determines that the personal computer 1b recognizes the command defined in the SBP2, and the algorithm proceeds to step S25.

In step S25, the topology analyzing unit 221 generates a priority list of the device having the Node_ID of zero, namely, of the personal computer 1b.

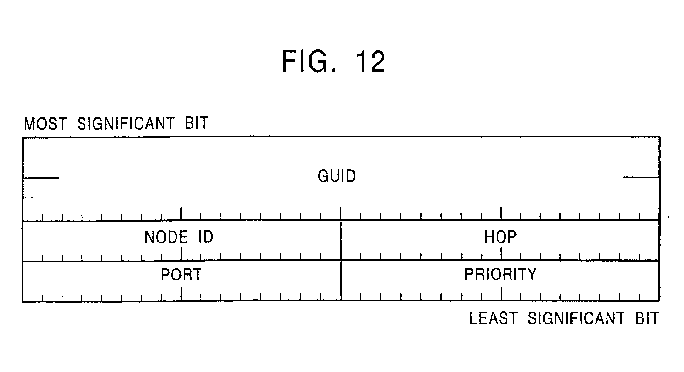

Referring to FIG. 12, a format of the priority list is discussed below. As shown, each column means a data bit, and data of 32 bits is arranged on each row. The bit at the top left position is the most significant bit, and the bit at the bottom right position is the least significant bit.

The format of the priority list is composed of a GUID of 64 bits, and Node_ID, HOP, PORT, and PRIORITY, each formed of 16 bits. The data of GUID contained in the self ID packet sent from each device is contained in the GUID. The data of Node_ID of each device is contained in the Node_ID. HOP represents the distance of the connection position determined by parent-child relationship of the devices contained in the self ID packet. For example, the personal computer 1b is positioned at a child of the personal computer 1a (the personal computer 1a is positioned to be hierarchically higher than the personal computer 1b). The HOP number is counted as 1 if the parent-child relationship is established. The personal computer 1a is connected to the HDD 2, and since the parent-child relationship is established here, one is further counted. As a result, the HOP number between the personal computer 1b and the HDD becomes 2. The HOP number of 2 is thus stored in the HOP in the priority list of the personal computer 1b. As for the personal computers 1a, 1b, and 1c, the parent-child relationship is established for each, and the HOP number of 1 is thus stored.

The PORT is data that indicates to which port of the HDD 2 the device is connected (any of the IEEE 1394 ports 201a through 201c). In case of the personal computers 1a and 1b, the data respectively indicating the IEEE 1394 ports 201b and 201c is stored.

The PRIORITY stores data indicating the access priority order determined in a priority determination process to be discussed later. In the discussion that follows, the data of the PRIORITY starts with zero, and the smaller the PRIORITY data, the higher the access priority is.

Returning to FIG. 11, the flow diagram is continuously discussed.

In step S25, the topology analyzing unit 221 generates the priority list of the personal computer 1b having the Node_ID of zero, and stores the priority list in the priority memory 222. The topology analyzing unit 221 organizes the data of the GUID of the personal computer 1b, the Node_ID (currently zero), the HOP number (currently 2), and the PORT (currently data indicating the IEEE 1394 port 201a) in the format as shown in FIG. 12, and then stores these pieces of data in the priority memory 222.

In step S26, the topology analyzing unit 221 increments the count i of the Node_ID by 1 (currently, i=1). In step S27, the topology analyzing unit 221 determines whether the count i of the Node_ID incremented is equal to or greater than node number n. Since the count i is 1, the topology analyzing unit 221 determines the count i is not greater than the node number n=5. The algorithm then loops to step S23.

In step S23, the topology analyzing unit 221 determines whether the device having the count i of the Node_ID is the HDD 2. Since the device having the Node_ID of 1 is the personal computer 1a, the topology analyzing unit 221 determines that the device is not the HDD 2. The algorithm proceeds to step S24.

In step S24, the topology analyzing unit 221 determines whether the personal computer 1a having the Node_ID of 1 recognizes a command defined in the SBP2. Like the personal computer 1b, the personal computer 1a also recognizes the SBP2 command. The topology analyzing unit 221 determines that the personal computer 1a recognizes the SBP2 command. The algorithm then proceeds to step S25.

In step S25, the topology analyzing unit 221 generates the priority list of the personal computer 1b having the Node_ID of 1 from the GUID, the Node_ID (currently 1), the HOP (currently 1), and the PORT (currently data indicating the IEEE 1394 port 201a), and stores the priority list in the priority memory 222.

In step S26, the topology analyzing unit 221 increments the count i of the Node_ID by 1 (to be i=2). In step S27, the topology analyzing unit 221 determines whether the count i of the Node_ID is equal to or greater than the node number n=5. Since the count i of the Node_ID is now 2, the topology analyzing unit 221 determines that the count i is not greater than the node number n=5. The algorithm then loops to step S23.

In step S23, the topology analyzing unit 221 determines whether the device having the count i of the Node_ID is the HDD 2. Since the device having the Node_ID of 2 is now the HDD 2, the topology analyzing unit 221 determines that the device having the Node_ID of 2 is the HDD 2. The algorithm proceeds to step S26, skipping steps S24 and S25. In step S26, the count i of the Node_ID is incremented by 1 (to be i=3). In step S27, the topology analyzing unit 221 determines whether the count i of the Node_ID is equal to or greater than the node number n=5. Since the count i is 3, not equal to nor greater than 5, the topology analyzing unit 221 determines that the count i of the Node_ID is not equal to nor greater than the node number n=5. The algorithm then loops to step S23.

In step S23, the device having the count i of the Node_ID equal to 3 is the personal computer 1c, not the HDD 2. The algorithm proceeds to steps S24 and S25. In the same way as already discussed, the topology analyzing unit 221 generates the priority list from the GUID of the personal computer 1c, the Node_ID (currently 3), the HOP (currently 1), and the HOP (currently data indicating the IEEE 1394 port 201b).

In step S26, the count i of the Node_ID is incremented by 1 (to be i=4). In step S27, the topology analyzing unit 221 determines whether the count i of the Node_ID is equal to or greater than the node number n=5. Since the count i is not equal to nor greater than the node number n=5, the algorithm loops to step S23.

In step S23, the topology analyzing unit 221 determines whether the device having the count i=4 of the Node_ID is the HDD 2. Since the device having the Node_ID of 4 is the personal computer 1d, the topology analyzing unit 221 determines that the device having the Node_ID of 4 is not the HDD 2. In step S24, the topology analyzing unit 221 determines whether the device having the Node_ID of 4 recognizes the command defined in the SBP2. Since the personal computer 1d is unable to recognize the SBP2 command, the topology analyzing unit 221 determines that the personal computer 1d is unable to recognize the SBP2 command. The algorithm then proceeds to step S26.

In step S26, the topology analyzing unit 221 increments the count i of the Node_ID by 1 (to be i=5). In step S27, the topology analyzing unit 221 determines whether the count i=5 is equal to or greater than the node number n=5. In this case, the count i=5 is equal to the node number n=5, and the algorithm ends.

In the topology analysis process, the priority list of the personal computers 1a through 1c is generated, and is stored in the priority memory 222. The priority list of the HDD 2 is not generated, because the HDD 2 is its own device. The priority list of the personal computer 1d is not generated either, because it is unable to recognize the SBP2 command.

Returning to FIG. 9, the flow diagram is continuously discussed.

Subsequent to the topology process in step S12, the topology analyzing unit 221 performs the priority determination process in step S13.

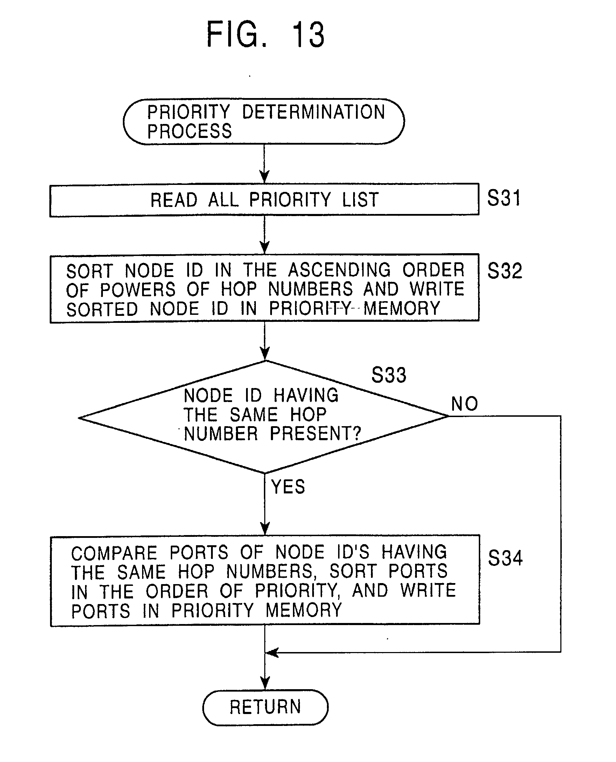

Referring to the flow diagram in FIG. 13, the priority determination process is discussed below.

In step S31, the topology analyzing unit 221 reads all priority lists from the priority memory 222. In step S32, the topology analyzing unit 221 references the HOP data out of the priority list data, sorts the priority list in the ascending order of powers, and then writes the determined order in the PRIORITY in the priority list. In this case, the HOP numbers of the personal computers 1a and 1c is 1, and the HOP number of the personal computer 1b is 2. The personal computers 1a and 1c with the same HOP number have a first priority, and zero is written in the PRIORITY of the priority list of the personal computers 1a and 1c. Next to them, 2 is written in the PRIORITY of the priority list of the personal computer 1b.

In step S33, the topology analyzing unit 221 determines whether there are present any devices having the same HOP number. In this case, the personal computers 1a and 1c have the same HOP number, namely, 1, and the topology analyzing unit 221 determines that there are devices having the same HOP number. The algorithm then proceeds to step S34.

In step S34, the topology analyzing unit 221 compares the PORT data having the same HOP number, and places the device having the higher priority order of the PORT at a hierarchically higher position. Here, the PORT of the personal computer 1a is the IEEE 1394 port 201a, and the PORT of the personal computer 1c is the IEEE 1394 port 201b. In accordance with the predetermined priority order of the IEEE 1394 ports 201a through 201c, the IEEE 1394 port 201a is higher in order than the IEEE 1394 port 201b, and zero is written in the PRIORITY of the priority list of the personal computer 1a, and 1 is written in the PRIORITY of the priority list of the personal computer 1c.

As a result, the priority order of the personal computers 1a through 1c is that the first priority is placed on the personal computer 1a, the second priority is placed on the personal computer 1c, and the third priority is placed on the personal computer 1b.

In the priority determination process, the priority list having the priority order of access right to access the HDD 2 is stored in the priority memory 222.

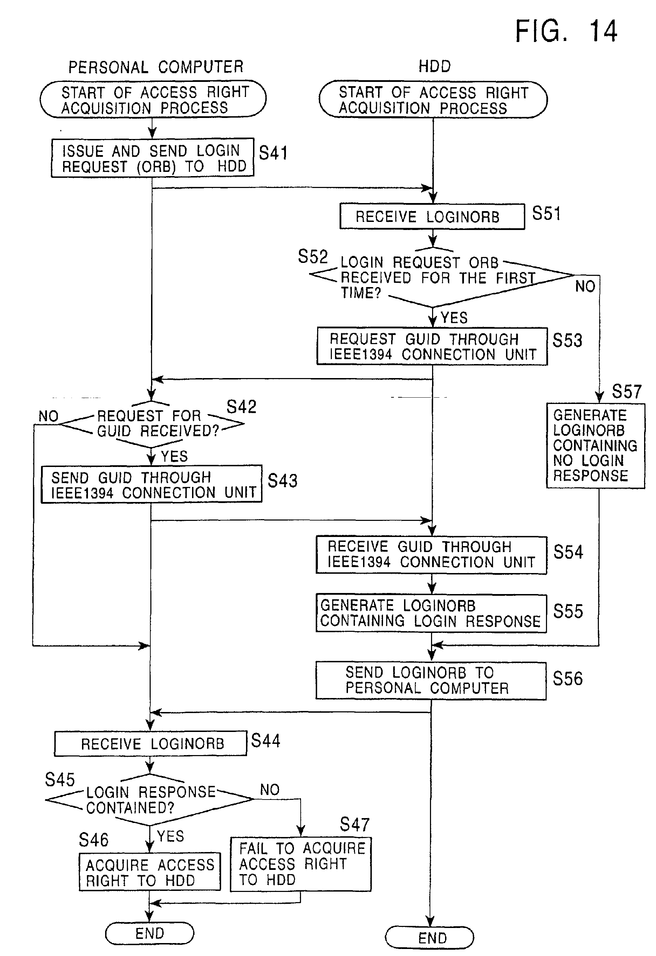

Referring to a flow diagram shown in FIG. 14, the operation of the personal computer 1 and the HDD 2 shown in FIG. 10 is discussed wherein the personal computer 1 gains the access right to access the HDD 2 with the unshown switch set to cause the CPU 204 not to reference the priority list.

In step S41, the personal computer 1a initiates the IEEE 1394 I/F monitoring program 70A, thereby issuing a command called login request (LoginORB or Login Operation Request Block), and outputs the login request to the HDD 2 through the IEEE 1394 connection unit 3.

The LoginORB is discussed below. The LoginORB is one type of ORBs (Operation Request Blocks) which are defined in the SBP2 standards. The ORB is issued by the initiator, and is output to the target. Based on the ORB, the target performs a predetermined process. When the predetermined process is executed and completed, information about the process is written on the position of the received ORB, and the ORB is then returned to the initiator.

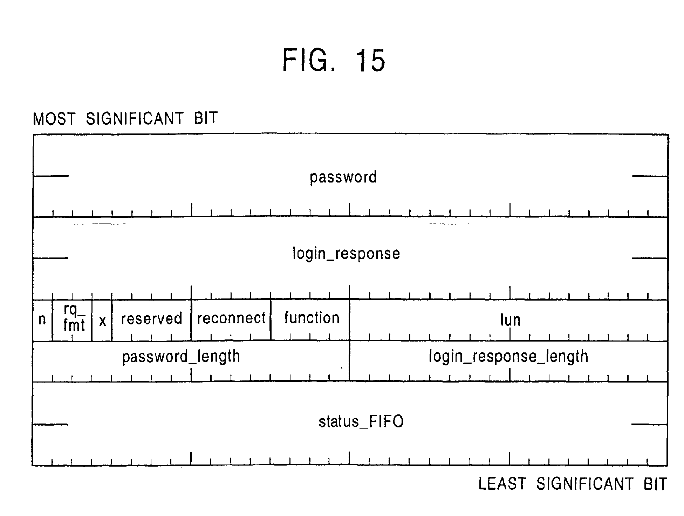

FIG. 15 illustrates the format of the LoginORB. As shown, each column is shown in the same manner as in FIG. 12. When there is no clear partition between rows, a data area is variable.

The data and the data length of a password registered in a device which has gained the access right (currently, the HDD 2) are stored in locations labeled "password" and "password_length". The password is optional, and is omitted when the use of the password is not set.

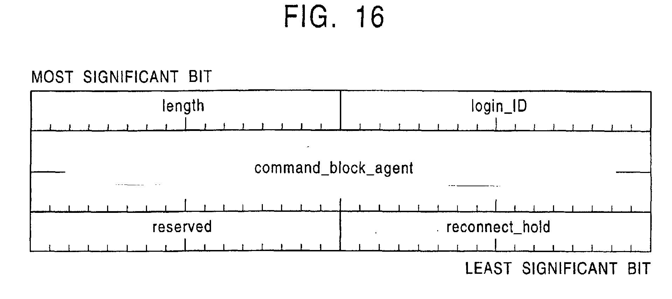

The data and the data length of the access right is written at locations labeled "login_response" and "login_response_length" by the HDD 2 when the HDD 2 grants the access right in response to the LoginORB. The "long_response" will be detailed later with reference to FIG. 16. Data identifying the ORB is stored in locations labeled "n" (notify), "rq_fmt" (request format), and "function" below the "login_response". In this case, data indicating LoginORB is stored.

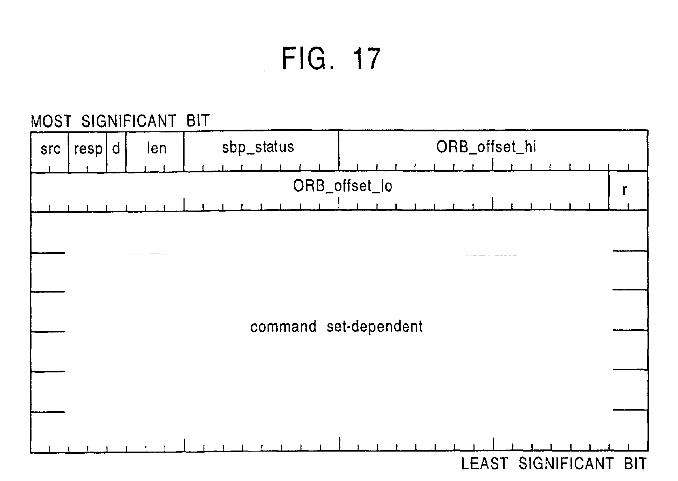

Stored at a location labeled "x" (short for exclusive) is data indicating whether the LoginORB is transferred to a plurality of initiators or only a requesting initiator. A location labeled "reserved" is reserved for future use for a command. Data about time required for reconnection is stored at a location labeled "reconnect". Stored at a location labeled "lun" (short for logical unit number) is data designating the destination of the LoginORB (currently the HDD 2). A status block (see FIG. 17) is written at a location labeled "status FIFO" at the moment the HDD 2 completes the execution of the command.

Returning to FIG. 14, the flow diagram is continuously discussed.

When the personal computer 1a outputs a login request, the CPU 204 of the HDD 2 receives the login request (LoginORB) through the IEEE 1394 connection unit 3 and the IEEE 1394 interface 202, and stores the LoginORB in the memory 205 in step S51. In step S52, the CPU 204 determines whether the LoginORB is received for the first time. When it is determined that the LoginORB is received for the first time, the algorithm proceeds to step S53.

In step S53, the CPU 204 causes the memory 205 to store the fact that the LoginORB has been received, and requests a GUID from the personal computer 1a via the IEEE 1394 interface 202 and the IEEE 1394 connection unit 3.

The CPU 72 of the personal computer 1a determines in step S42 whether the GUID is requested by the HDD 2. Since the GUID is requested by the HDD 2, the CPU 72 reads GUID 70H stored in the ROM 70, and sends it to the HDD 2 through the IEEE 1394 connection unit 3.

In step S54, the CPU 204 of the HDD 2 receives the GUID of the personal computer 1a through the IEEE 1394 interface 202, and stores the GUID in the memory 205.

In step S55, the CPU 204 reads the LoginORB stored in the memory 205, writes the "log_response" and "status_FIFO" containing data that grants the access right in the LoginORB, and then generates the LoginORB to be transmitted back to the personal computer 1a.

Referring to FIG. 16, the "login_response" is discussed.

Data indicating the data length of the "login_response" is stored at a location labeled "length" at the top row of the "login_response". Data identifying an initiator that is granted access is stored at a location labeled "login_ID". Stored at a location labeled "command_block_agent" is data of an address of a register (CSR short for Control and State Register) for executing a variety of operations. A location labeled "reserved" is reserved for future use for a command like in the LoginORB. Stored at a location labeled "reconnect_hold" is data about time required to assure resources with which the access granted initiator initiates an action.

Referring to FIG. 17, status_block on which the "status_FIFO" is written is now discussed. Data identifying the type of ORB is stored at a location labeled "src". In this case, the data indicating the LoginORB is stored. Data identifying a response type is stored at a location labeled "resp". Stored at a location labeled "d" is data indicating whether a current target is in a state ready to receive a command.

Stored at a location labeled "len" is data indicating the number of pieces of effective status_block information stored in the status_FIFO. Stored at a location labeled "sbp_status" is additional data corresponding to information stored at the location "resp". Locations labeled "ORB_offset_hi", "ORB_offset_lo" and "r" are used to designate a variety of address spaces. A variety of data for each command is stored at a location labeled "command set-dependent".

Returning to FIG. 14, the flow diagram is continuously discussed.

In step S56, the CPU 204 sends the generated LoginORB to the personal computer 1a through the IEEE 1394 interface 202 and the IEEE 1394 connection unit 3.

In step S44, the CPU 72 of the personal computer 1a receives the LoginORB input from the HDD 2 through the IEEE 1394 connection unit 3. In step S45, the CPU 72 determines whether the login_response is contained in the received LoginORB. Since the login_response is contained in the received LoginORB in this case, the CPU 72 recognizes in step S46 that the personal computer 1a has gained the access right to access the HDD 2.

When the CPU 204 determines in step S52 that the LoginORB is not received for the first time, in other words, the personal computer 1b has already requested the access right, the CPU 204 reads in step S57 the LoginORB stored in the memory 205, and generates a LoginORB to be returned containing no login_response, namely, with a status block only written on the "Status_FIFO" of the LoginORB.

Since the CPU 72 of the personal computer 1a determines in step S42 that the GUID is not requested by the HDD 2, the process in step S43 is skipped. The LoginORB containing no login_response is received in step S44. The CPU 72 then determines in step S45 that no login_response is contained. In step S47, the CPU 72 recognizes that it has failed to gain the access right to access the HDD 2.

Specifically, if the personal computer 1b which has requested the access right earlier and has gained the access right, the personal computer 1a which has requested later the access right fails to gain it.

If the CPU 204 is designed to reference the priority list with the unshown switch in this way, no arbitration for the access right is performed. The process in the flow diagram shown in FIG. 14 remains unchanged from the conventional race condition, and the access right is granted to the personal computer 1 which has requested first the access right from the HDD 2.

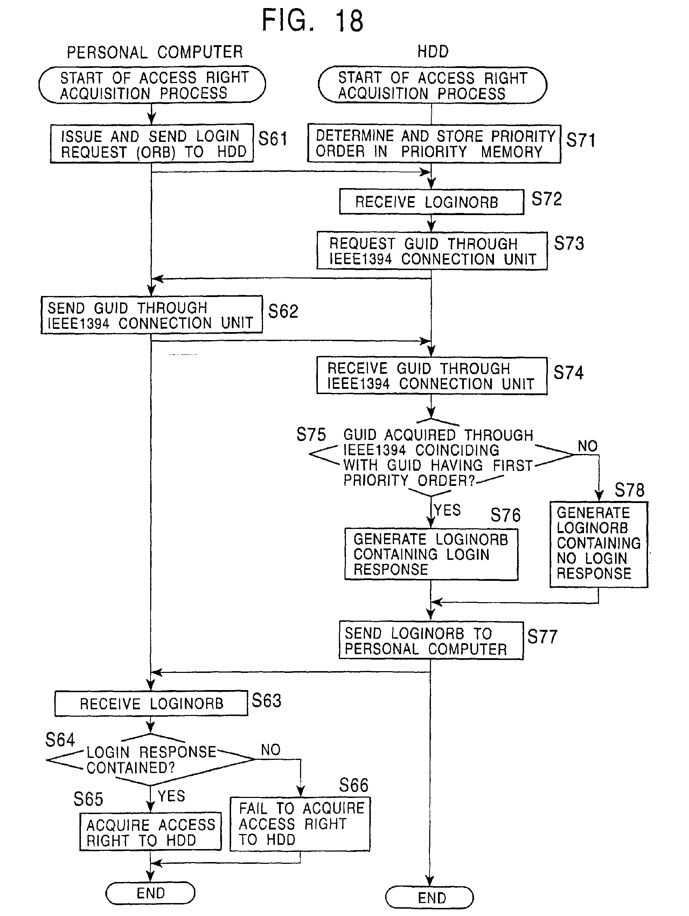

Referring to a flow diagram shown in FIG. 18, the process of the personal computer 1 which gains the access right to access the HDD 2 is discussed wherein the CPU 204 references the priority list stored in the priority memory 222.

In step S61, the CPU 72 of the personal computer 1a initiates the IEEE 1394 I/F monitoring program 70A, issuing the LoginORB, and outputting the LoginORB to the HDD 2 via the IEEE 1394 connection unit 3.

Since the CPU 204 of the HDD 2 is set to reference the priority memory 222 in the priority determination module 203, the priority determination module 203 determines beforehand the priority order of the access right to the devices connected to the network through the bus reset process discussed with reference to the flow diagram in FIG. 9 in step S71 at the moment the HDD 2 is connected to the personal computer 1a (namely, at the moment of the bus reset). The priority determination module 203 then stores the priority order in the priority memory 222. The CPU 204 performs the process from step S72 through step S78 in FIG. 18 rather than the process from step S51 through step S57 in FIG. 14.

In step S72, the CPU 204 of the HDD 2 receives the LoginORB through the IEEE 1394 connection unit 3 and the IEEE 1394 interface 202, and stores the LoginORB in the memory 205.

In step S73, the CPU 204 requests the personal computer 1a to send the GUID via the IEEE 1394 interface 202 and the IEEE 1394 connection unit 3.

In step S62, the CPU 72 of the personal computer 1a reads the GUID 70H stored in the ROM 70, and then sends the GUID to the HDD 2 through the IEEE 1394 connection unit 3.

When the CPU 204 of the HDD 2 receives the GUID of the personal computer 1a through the IEEE 1394 interface 202 in step S74, the GUID is stored in the memory 205.

In step S75, the CPU 204 of the HDD 2 compares the GUID stored in the memory 205 with the GUID having the first priority order of the access right stored in the priority memory 222 to determine whether the two coincide with each other. Since the GUIDs are of the same personal computer 1a in this case, the two GUIDs are found to coincide with each other. The algorithm proceeds to step S76.

In step S76, the CPU 204 reads the LoginORB stored in the memory 205, and generates the LoginORB to be sent to the personal computer 1a, in which the "login_response" containing the data granting the access right and the status indicating "status_FIFO" are written.

In step S77, the CPU 204 outputs the generated LoginORB to the personal computer 1a through the IEEE 1394 interface 202 and the IEEE 1394 connection unit 3.

In step S63, the CPU 72 of the personal computer 1 receives the LoginORB input from the HDD 2 through the IEEE 1394 connection unit 3. In step S64, the CPU 72 determines whether the login_response is contained in the received LoginORB. Since the received LoginORB includes the login_response, the CPU 72 recognizes in step S65 that the personal computer 1 has gained the access right to access the HDD 2.

The device that has requested the access right is the personal computer 1b, and the GUID having the first priority order stored in the priority memory 222 is the personal computer 1a. The GUID stored in the priority memory 222 fails to coincide with the GUID of the personal computer 1b stored in the memory 205. In step S57, the HDD 2 determines that the GUIDs fail to coincide with each other. The algorithm proceeds to step S78.

In step S78, the CPU 204 reads the LoginORB stored in the memory 205, and generates the LoginORB to be returned, containing no login_response, namely, the LoginORB with the status block only written in the "Status_FIFO" of the LoginORB.

In step S63, the personal computer 1b receives the LoginORB having no login_response. The CPU 72 determines in step S64 that no login_response is contained. In step S66, the CPU 72 recognizes the personal computer 1b has failed to gain the access right to access the HDD 2.

In this way, the CPU 204 is designed to read the GUID having the first priority in the priority list stored in the priority memory 222 so that only the personal computer 1a having the internal HDD 2 (only the personal computer 1a connected to the IEEE 1394 port 201a of the HDD 2) gains the access right to access the HDD 2.

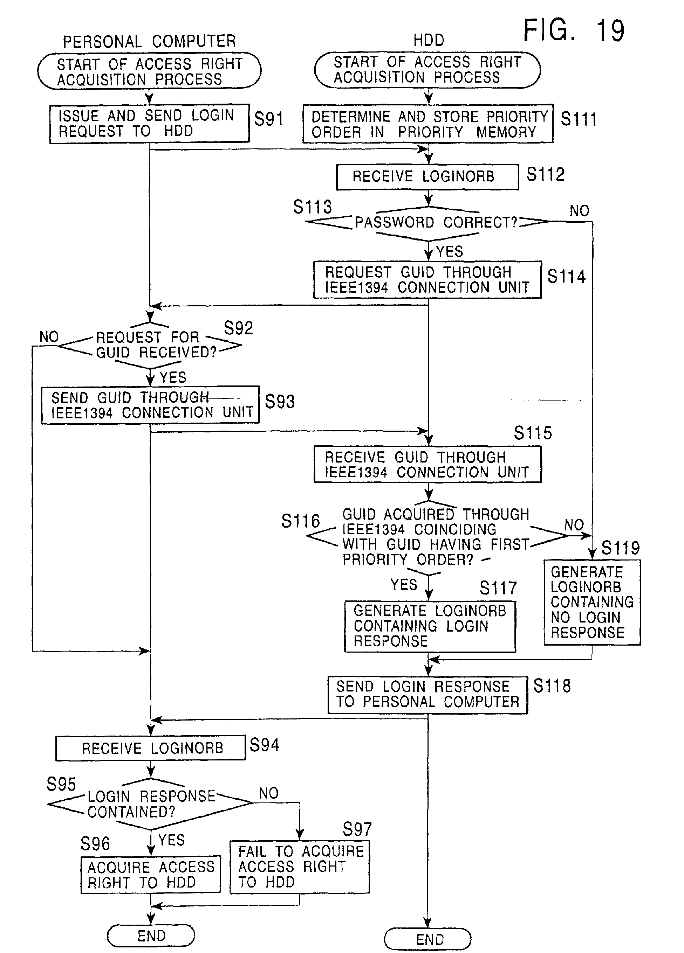

Referring to a flow diagram shown in FIG. 19, the acquisition process of the personal computer 1 for acquiring the access right to access the HDD 2 is discussed below wherein the password function of the LoginORB is used with the CPU 204 set to reference the priority list stored in the priority memory 222 of the priority determination module 203.

In step S91, the CPU 72 of the personal computer 1a initiates the IEEE 1394 I/F monitoring program 70A, issuing the LoginORB containing a password, and outputting the LoginORB to the HDD 2 through the IEEE 1394 connection unit 3. The password contained in the LoginORB may be set beforehand by the user.

The CPU 204 is set to reference the priority memory 222 in the priority determination module 203. When the HDD 2 is connected to the personal computer 1a (at the moment of the bus reset), the priority determination module 203 determines, in step S111, the access priority order of the device connected to the network through the bus reset process discussed with reference to FIG. 9. The priority determination module 203 then stores the access priority order in the priority memory 222. The CPU 204 performs the process from step S112 through step S119 illustrated in FIG. 19 rather than the process from step S71 through step S78 illustrated in FIG. 18.

In step S112, the CPU 204 receives the LoginORB through the IEEE 1394 connection unit 3 and the IEEE 1394 interface 202 and stores the received LoginORB in the memory 205.

In step S113, the CPU 204 determines whether a password contained in the received LoginORB coincides with the password stored beforehand in the memory 205. When a correct password is received, in other words, when the password contained in the received LoginORB coincides with the password stored beforehand in the memory 205, the algorithm proceeds to step S114.

In step S114, the CPU 204 requests the GUID from the personal computer 1a through the IEEE 1394 interface 202 and the IEEE 1394 connection unit 3.

The CPU 72 of the personal computer 1a determines in step S92 whether the HDD 2 has requested the GUID. The HDD 2 now requests the GUID, and in step S93, the CPU 72 reads the GUID 70H stored in the ROM 70, and sends the GUID to the HDD 2 through the IEEE 1394 connection unit 3.

In step S115, the CPU 204 of the HDD 2 receives the GUID of the personal computer 1a through the IEEE 1394 interface 202, and stores the GUID in the memory 205.

In step S116, the CPU 204 of the HDD 2 compares the GUID stored in the memory 205 with the GUID of the device having the first priority order of access right stored in the priority memory 222 to determine whether the two GUIDs coincide with each other. The CPU 204 determines that the two GUIDs coincide with each other because the two are of the personal computer 1a. The algorithm proceeds to step S117.

In step S117, the CPU 204 reads the LoginORB stored in the memory 205, and generates the LoginORB to be returned to the personal computer 1a, with "login_response" containing data granting the access right, and "status_FIFO" written thereon.

In step S118, the CPU 204 outputs the generated LoginORB to the personal computer 1a through the IEEE 1394 interface 202 and the IEEE 1394 connection unit 3.

In step S94, the CPU 72 of the personal computer 1a receives the LoginORB input from the HDD 2 through the IEEE 1394 connection unit 3. In step S95, the CPU 72 determines whether the login_response is contained in the received LoginORB. Now, the login_response is contained in the received LoginORB, and in step S96, the CPU 72 recognizes that the personal computer 1a has gained the access right to access the HDD 2.

When it is determined in step S113 that the passwords fail to coincide with each other, the CPU 204 reads, in step S119, the LoginORB stored in the memory 205, and generates the LoginORB to be returned, containing no login_response, namely, with the status block only written in the "Status_FIFO" thereof.

In step S92, the CPU 72 of the personal computer 1a determines that the personal computer 1a has received no request for the GUID from the HDD 2, and the process in step S93 is skipped. In step S94, the LoginORB containing no login_response is received, and in step S95, the CPU 72 of the personal computer 1a determines that no login_response is contained. In step S97, the CPU 72 recognizes that the personal computer 1a has failed to gain the access right to access the HDD 2.

The personal computer 1b has requested the access right, and the correct password is entered. In step S116, the GUIDs are determined to fail to coincide with each other, because the GUID of the device having the first priority order of access right is of the personal computer 1a, and does not agree with the GUID of the personal computer 1b. The algorithm proceeds to step S119 to perform the process thereafter.

The CPU 204 is set to read the GUID of the device having the first priority order of the access right stored in the priority memory 222 in the priority determination module 203. Only the personal computer 1a having the HDD 2 gains the access right to access the HDD 2, while maintaining the compatibility with the password function defined in the SBP2.

The HDD has been discussed as a device complying with the SBP2 standards. The HDD may be replaced with any of the following storage devices complying with the SBP2 including CD-R/RW (Compact Disk Recordable/Rewritable), CD-ROM (Compact Disk-Read Only Memory), DVD-ROM (Digital Versatile Disk-Read Only Memory), DVD-RAM (Digital Versatile Disk-Random Access Memory), Zip (memory device), and MD (Mini-Disk).

In the above discussion, the access right is granted to only the device which has the first priority order of the access right to access the HDD 2. The access right granted devices may be changed in accordance with the structure of a network, for example, the access right may be granted to the devices having the first through the third priority order.

In the IEEE 1394 network complying with the SBP2 standards, the predetermined information processing apparatus (the initiator) gains the access right to access the device (the target) mounted therewithin.

The above series of process steps is performed using hardware. Alternatively, these process steps may be performed using software programs. When the process steps are performed using a software program, a program code forming the software program may be installed in a computer assembled into a dedicated hardware, or a program code forming the software program may be installed from a program recording medium to a general-purpose personal computer which performs a variety of functions when a diversity of software programs are installed.

The program recording medium may be a package medium which may be distributed separately from the personal computer to supply the user with the software programs. The package medium may be a magnetic disk 121(such as a floppy disk), an optical disk 122 (CD-ROM short for Compact Disk-Read Only Memory), a magnetooptical disk 123 (such as a mini disk) or a semiconductor memory 124 (such as a memory stick).

It is not necessary that the process steps describing the software program for the CPU 20 to perform a diversity of processes be chronologically performed in the order stated in each flow diagram. Several process steps may be performed in parallel or separately.

In this specification, the system refers to an entire system containing a plurality of apparatuses.

### Industrial Applicability

In accordance with the present invention, the network structure is recognized from the input authentication information, and the priority order of the access right according to which the plurality of other information processing apparatuses accesses a device is determined based on the recognized network structure. A predetermined information processing apparatus properly gains the access right to the device.

## Claims

1. An information processing apparatus connected to a plurality of other information processing apparatuses through a network, the information processing apparatus comprising:
input means for inputting authentication information output from the plurality of other information processing apparatuses,
network structure recognition means for recognizing the structure of the network based on the authentication information input by the input means,
priority order determining means for determining the priority order according to which the plurality of other information processing apparatuses accesses own information processing apparatus, based the network structure recognized by the network structure recognition means, and
access control means for controlling the access of the plurality of other information processing apparatuses to own information processing apparatus, based on the priority order determined by the priority order determining means.

2. An information processing apparatus according to claim 1, further comprising topology generation means for generating topology based on the authentication information of the plurality of other information processing apparatuses input by the input means,
wherein the network structure recognition means recognizes the structure of the network based on the topology generated by the topology generation means.

3. An information processing apparatus according to claim 1, further comprising hop number counting means for counting a hop number over the network per each of the plurality of information processing apparatuses, based on the network structure recognized by the network structure recognition means,
wherein the priority order determining means determines the priority order of access rights of the plurality of information processing apparatuses to own information processing apparatus, based on the hop number of each of the plurality of information processing apparatuses counted by the hop number counting means.

4. An information processing apparatus according to claim 3, further comprising a plurality of connection ports to which the plurality of information processing apparatuses is connected, and
connection port priority order setting means for setting the priority order of the plurality of connection ports,
wherein the priority order determining means determines the priority order of the access rights of the plurality of information processing apparatuses to own information processing apparatuses, based on the hop number of each of the plurality of information processing apparatuses counted by the hop number counting means and the priority order to the connection port set by the connection port priority order setting means.

5. An information processing apparatus according to claim 1, wherein the network is a 1394 high-speed serial bus, and the authentication information contains a self ID packet.

6. An information processing method for an information processing apparatus connected to a plurality of other information processing apparatuses through a network, the information processing method comprising:
an input step for inputting authentication information output from the plurality of other information processing apparatuses,
a network structure recognition step for recognizing the structure of the network based on the authentication information input in the input step,
a priority order determining step for determining the priority order according to which the plurality of other information processing apparatuses accesses own information processing apparatus, based the network structure recognized in the network structure recognition step, and
an access control step for controlling the access of the plurality of other information processing apparatuses to own information processing apparatus, based on the priority order determined in the priority order determining step.

7. A software program for controlling an information processing apparatus connected to a plurality of other information processing apparatuses through a network, the program comprising:
an input step for inputting authentication information output from the plurality of other information processing apparatuses,
a network structure recognition step for recognizing the structure of the network based on the authentication information input in the input step,
a priority order determining step for determining the priority order according to which the plurality of other information processing apparatuses accesses own information processing apparatus, based the network structure recognized in the network structure recognition step, and
an access control step for controlling the access of the plurality of other information processing apparatuses to own information processing apparatus, based on the priority order determined in the priority order determining step.
